# EUROPÄISCHE PATENTSCHRIFT

(11) **EP 3 911 657 B1**
(45) Veröffentlichungstag und Bekanntmachung des Hinweises auf die Patenterteilung: **04.01.2023**
(21) Anmeldenummer: 19801883.0
(22) Anmeldetag: 14.11.2019
(51) Int. Cl.: C07F 7/12

(54) **VERFAHREN ZUR UMWANDLUNG VON ORGANOSILANEN**
PROCESS FOR CONVERTING ORGANOSILANES
PROCÉDÉ DE CONVERSION D'ORGANOSILANES

(30) Priorität: 10.07.2019 WO PCT/EP2019/068576
(43) Veröffentlichungstag der Anmeldung: 24.11.2021
(73) Patentinhaber: Wacker Chemie AG, 81737 München (DE)
(72) Erfinder: BETSCHINGER, Frank, 84503 Altötting (DE); BOCKHOLT, Andreas, 80805 München (DE); BÖCK, Manfred, 84489 Burghausen (DE); FLEISCHMANN, Gerald, 84489 Burghausen (DE); KÄPPLER, Klaus, 84489 Burghausen (DE)
(74) Vertreter: Mieskes, Klaus Theoderich
(86) Internationale Anmeldenummer: PCT/EP2019/081260
(87) Internationale Veröffentlichungsnummer: WO 2021/004648

(56) Entgegenhaltungen:
- US-A1- 2003 109 735
- SIMON G ET AL: "NOUVELLES SYNTHESES DE ME2SICL2 ET ME3SICL", JOURNAL OF ORGANOMETALLIC CHEMISTRY, ELSEVIER, AMSTERDAM, NL, Bd. 206, 1. Januar 1981 (1981-01-01), Seiten 279-286, XP002073405, ISSN: 0022-328X, DOI: 10.1016/S0022-328X(00)83025-9

## Beschreibung

Die Erfindung betrifft ein Verfahren zur Umwandlung von Organosilanen.

Die Umwandlung von Organosilanen durch Ligandenaustausch, beispielsweise der Austausch von Methylgruppen gegen Chloratome am Siliciumatom, durch Coproportionierung von zwei oder mehreren verschieden substituierten Silanen, in Gegenwart von Katalysatoren, wie Aluminiumtrichlorid, ist aus W. Noll, Chemistry and Technology of Silicones, 1968, Seiten 57-58, bekannt. Wegen der geringen Aktivität von Aluminiumtrichlorid ist die Reaktionsgeschwindigkeit dieser Ligandenaustauschreaktionen gering und deshalb wenig wirtschaftlich.

In US 4,158,010 A ist die Umwandlung von Organosilanen durch Umsetzung von mindestens einem Silan (1) der allgemeinen Formel

RₐSiCl₄₋ₐ (I)

mit mindestens einem von Silan (1) verschiedenen Silan (2) der allgemeinen Formel

R_{b}SiCl_{4-b} (II),

wobei R jeweils gleiche oder verschiedene Alkylreste mit 1 bis 4 Kohlenstoffatomen bedeuten, a 2, 3 oder 4 und b 0, 1, 2 oder 3 ist, in Gegenwart von Aluminiumkatalysatoren, wie Aluminiumtrichlorid, und Silanen mit Si-gebundenem Wasserstoff sowie Chlorwasserstoff als Cokatalysatoren beschrieben.

Chlorwasserstoff hat den Nachteil, dass es bei Anlagen, welche aus Stahl gebaut sind, insbesondere in Gegenwart von Wasserspuren, korrosiv wirken kann.

In US 2003/0109735 A1 sind neben dem Einsatz von Aluminiumtrichlorid oder Aluminiumtribromid und wasserstoffhaltigen Silanen noch Metallsalze als Cokatalysatoren offenbart. Dies hat den Nachteil, dass relativ große Mengen von Feststoffen eingesetzt werden, deren Dosierung schwierig ist und bei der Aufarbeitung des Reaktionsgemisches wieder aufwändig abgetrennt werden müssen.

Simon G. et al., "Nouvelles Syntheses de Me2SiCl2 et Me3SiCl", Journal of Organometallic Chemistry, Elsevier, Amsterdam, NL, Bd. 206, 1. Januar 1981, Seiten 279-286 offenbart die Verteilungsreaktion von MeSiCl₃ unter Verwendung von AlCl₃ und TiH₂, wobei Me₂SiCl₂ erhalten wird, und die Verteilungsreaktion von Me₂SiCl₂ unter Verwendung von AlCl₃ und TiH₂, wobei Me₃SiCl und MeSiCl₃ erhalten wird.

Es bestand die Aufgabe, ein Verfahren zur Umwandlung von Organosilanen bereitzustellen, bei dem die oben genannten Nachteile vermieden werden und das eine Verkürzung der Reaktionszeit aufweist und somit eine verbesserte Wirtschaftlichkeit besitzt.

Die Aufgabe wird durch die Erfindung entsprechend der Ansprüche gelöst.

Gegenstand der Erfindung ist ein Verfahren zur Umwandlung von Organosilanen durch Umsetzung von mindestens einem Silan (1) der allgemeinen Formel

RₐSiCl₄₋ₐ (I)

mit mindestens einem weiteren Silan (2) der allgemeinen Formel

R_{b}SiCl_{4-b} (II)

wobei Silan (2) gleich oder verschieden von Silan (1), vorzugsweise verschieden von Silan (1), ist, gegebenenfalls unter Mitverwendung von Si-gebundenen Wasserstoff aufweisenden Silanen (3) der Formel

R_{d}HₑSiCl_{4-d-e} (III)

in Gegenwart von Aluminiumsalzen, vorzugsweise Aluminiumhalogeniden, als Katalysatoren und in Gegenwart von Cokatalysatoren,
wobei mindestens ein von Silan (1) und (2) verschiedenes Silan (4) der allgemeinen Formel

R_{c}SiCl_{4-c} (IV)

erhalten wird,
wobei R jeweils gleiche oder verschiedene Alkylreste mit 1 bis 4 Kohlenstoffatomen oder einen Phenylrest bedeutet,
a 2, 3 oder 4,
b 0, 1, 2 oder 3,
c 1, 2 oder 3,
d 0, 1, 2 oder 3 und
e 1, 2 oder 3 ist,
mit der Maßgabe, dass die Summe d+e höchstens 4 ist,
dadurch gekennzeichnet, dass als Cokatalysatoren solche ausgewählt aus der Gruppe der Trifluormethansulfonsäure, Trifluormethansulfonsäureester, Aluminiumtris(trifluormethansulfonat), Metallsalze von Yttrium und Hafnium, Metallsalze der Lanthanoiden und Actinoiden und Gemische dieser Cokatalysatoren eingesetzt werden.

Als Katalysatoren werden vorzugsweise Aluminiumhalogenide eingesetzt. Beispiele für Aluminiumhalogenide sind Aluminiumtribromid und Aluminiumtrichlorid.

Bevorzugt wird als Katalysator Aluminiumtrichlorid eingesetzt.

Beispiele für Trifluormethansulfonsäureester sind Trifluormethansulfonsäuresilylester, wie Trifluormethansulfonsäuretrimethylsilylester.

Die erfindungsgemäßen Cokatalysatoren sind selbst keine katalytisch aktiven Verbindungen. Weder Aluminium-tris(trifluormethansulfonat) noch Umsetzungsprodukte aus Aluminiumtrichlorid mit Trifluormethansulfonsäure oder Trifluormethansulfonsäure noch Trifluormethansulfonsäuretrimethylsilylester sind für sich allein katalytisch aktiv. Es war daher überraschend, dass der Zusatz der erfindungsgemäßen Cokatalysatoren zu Aluminiumtrichlorid eine erhebliche Verbesserung der katalytischen Aktivität von Aluminiumtrichlorid bewirkt, was eine deutliche Verkürzung der Reaktionszeit zur Folge hat. Es ist davon auszugehen, dass Trifluormethansulfonsäure mit Chlorsilanen die entsprechenden Trifluormethansulfonsäuresilylester bilden, die dann vermutlich als Cokatalysatoren wirken.

Ebenfalls wurde überraschenderweise gefunden, dass auch Metallsalze von Yttrium und Hafnium oder Metallsalze der Lanthanoiden und Actinoiden, welche für sich allein nicht katalytisch aktiv sind, als Cokatalysatoren in Kombination mit dem Katalysator Aluminiumtrichlorid die Reaktion erheblich beschleunigen können.

Als Metallsalze können Halogenide, vorzugsweise Fluoride, Chloride oder Bromide, bevorzugt Chloride; Sulfonate; Oxide oder Carboxylate eingesetzt werden.

Beispiele für Metalle der Lanthanoiden und Actinoiden sind Lanthan, Cer, Praseodym, Neodym, Samarium, Europium, Gadolinium, Terbium, Dysprosium, Holmium, Erbium, Thulium, Ytterbium und Lutetium, wobei Cer, Gadolinium und Terbium bevorzugt sind.

Beispiele für Metallsalze von Yttrium und Hafnium sind Yttriumtrichlorid und Hafniumtetrachlorid.

Beispiele für Metallsalze der Lanthanoiden und Actinoiden sind Lanthantrichlorid, Certrichlorid, Praseodymtrichlorid, Neodymtrichlorid, Samariumtrichlorid, Gadoliniumtrifluorid, Gadoliniumtrichlorid, Gadoliniumtribromid, Terbiumtrichlorid, Holmiumtrichlorid, Erbiumtrichlorid, Thuliumtrichlorid, Lutetiumtrichlorid, Dysprosiumtris(trifluormethansulfonat), Gadolinium(III)oxid und Gadolinium(III)acetat.

Bevorzugte Metallsalze sind Yttriumtrichlorid, Certrichlorid, Neodymtrichlorid, Gadoliniumtrifluorid, Gadoliniumtrichlorid, Gadoliniumtribromid, Gadolinium(III)acetat, Terbiumtrichlorid, Holiumtrichlorid und Lutetiumtrichlorid, wobei Certrichlorid, Gadoliniumtrichlorid und Terbiumtrichlorid besonders bevorzugt sind.

Beispiele für Alkylreste R mit 1 bis 4 Kohlenstoffatomen sind der Methyl-, Ethyl-, n-Propyl-, Isopropyl-, n-Butyl-, Isobutyl- und sec.-Butylrest, wobei der Methylrest bevorzugt ist.

Beispiele für Silane (1) der Formel (I) sind Tetramethylsilan, Trimethylchlorsilan, Dimethyldichlorsilan und Phenyltrichlorsilan, wobei Tetramethylsilan ein bevorzugtes Beispiel ist.

Beispiele für Silane (2) der Formel (II) sind Dimethyldichlorsilan, Methyltrichlorsilan und Tetrachlorsilan.

Beispiele für Silane (3) der Formel (III) sind Methyldichlorsilan, Dimethylchlorsilan, Trichlorsilan und Monochlorsilan.

Beispiele für Silane (4) der Formel (IV), die durch die Ligandenaustauschreaktionen beim erfindungsgemäßen Verfahren erhalten werden, sind Trimethylchlorsilan, Dimethyldichlorsilan und Methyltrichlorsilan.

Beim erfindungsgemäßen Verfahren wird Silan (1) der Formel (I) vorzugsweise in Mengen von 0,8 bis 1,2 Mol je Mol Silan (2) der Formel (II) eingesetzt.

Wenn beim erfindungsgemäßen Verfahren Si-gebundene Wasserstoff aufweisende Silane (3) mitverwendet werden, werden sie in Mengen von 0,01 bis 10 Gew.-%, vorzugsweise in Mengen von 0,1 bis 3 Gew.-%, jeweils bezogen auf das Gesamtgewicht der Silane (1) und (2), eingesetzt.

Das als Katalysator eingesetzte Aluminiumtrichlorid kann auch in situ hergestellt werden, beispielsweise durch die Umsetzung von Ethylaluminiumsesquichlorid mit Chlorwasserstoff.

Beim erfindungsgemäßen Verfahren wird Aluminiumtrichlorid in Mengen von vorzugsweise 0,2 bis 10 Gew.-%, bevorzugt von 0,8 bis 3,0 Gew.-%, jeweils bezogen auf das Gesamtgewicht der eingesetzten Silane (1) und (2), eingesetzt.

Beim erfindungsgemäßen Verfahren werden die Cokatalysatoren bezogen auf Aluminiumtrichlorid in Mengen von vorzugsweise 1 bis 25 Gew.-%, bevorzugt 1 bis 10 Gew.-%, eingesetzt.

Die Cokatalysatoren werden damit bezogen auf das Gesamtgewicht der eingesetzten Silane (1) und (2) beim erfindungsgemäßen Verfahren in Mengen von vorzugsweise 0,002 bis 2,5 Gew.-%, bevorzugt 0,008 bis 0,3 Gew.-%, eingesetzt.

Das erfindungsgemäße Verfahren wird vorzugsweise bei 0°C bis 200°C, bevorzugt 20°C bis 100°C, und bei einem Druck von vorzugsweise 1 bis 100 bar, bevorzugt 1 bis 10 bar, besonders bevorzugt beim Druck der umgebenden Atmosphäre, also bei etwa 1 bar, durchgeführt.

Das erfindungsgemäße Verfahren kann diskontinuierlich, halbkontinuierlich oder vollkontinuierlich durchgeführt werden.

Das erfindungsgemäße Verfahren hat den Vorteil, dass die Reaktionszeit deutlich verkürzt wird. Die verkürzte Reaktionszeit bewirkt eine höhere Anlagenkapazität und eine verbesserte Wirtschaftlichkeit durch die Erhöhung der Raum/Zeit-Ausbeute.

Das erfindungsgemäße Verfahren hat auch den Vorteil, dass es die Reaktionszeit nicht nur bei der Umsetzung von Tetramethylsilan mit Dimethyldichlorsilan zu Trimethylchlorsilan verkürzt, sondern auch die bei langsameren Ligandenaustauschreaktionen, wie beispielsweise bei der Reaktion von Tetramethylsilan mit Tetrachlorsilan oder Methyltrichlorsilan. Ebenfalls kann die Reaktionszeit bei der Reaktion von Trimethylchlorsilan mit Methyltrichlorsilan zu Dimethyldichlorsilan verkürzt werden.

Die Disproportionierung von Dimethyldichlorsilan oder Phenyltrichlorsilan (d.h. Silan (2) ist gleich Silan (1)) lässt sich mit dem erfindungsgemäßen Verfahren bei verkürzter Reaktionszeit ebenfalls durchführen.

### Beispiele 1 bis 14 und Vergleichsversuche 1 bis 5: Umsetzung von Tetramethylsilan mit Dimethyldichlorsilan

Die Beispiele 1 bis 14 und Vergleichsversuche 1 bis 5 wurden unter Inertbedingungen in einem Dreihalskolben mit Rührer, Rückflusskühler (betrieben mit einem Kryostat), Tropftrichter und Reaktionstemperaturmessung durchgeführt.

Dimethyldichlorsilan wurde vorgelegt und mit dem Katalysator und Cokatalysator (Beispiele 1-14) versetzt. Beim Vergleichsversuch 1 und 5 wird nur der Katalysator, bei den Vergleichsversuchen 2 bis 4 nur die Cokatalysatoren zugegeben. Anschließend wurde technisches Tetramethylsilan (ca. 85 Gew.-% bestimmt durch Gaschromatographie (GC), enthält ca. 3-5 Gew.-% Dimethylchlorsilan) zudosiert.

Die Mischung wurde zum Rückfluss erhitzt und regelmäßig Proben entnommen. Die Proben wurden zur Abtrennung der Feststoffanteile destilliert und das Destillat mittels Gaschromatographie (GC, Säule: Agilent DB 210, Länge: 60 m, Durchmesser: 0,32 mm) analysiert.

### Beispiel 1:

150 g Dimethyldichlorsilan
115 g technisches Tetramethylsilan
8 g AlCl₃
1,5 g Trifluormethansulfonsäure
Nach 105 min Reaktionszeit betrug der verbleibende Tetramethylsilan-Gehalt weniger als 1 Gew.-% und der Gehalt an Trimethylchlorsilan 86 Gew.-%.

### Beispiel 2:

150 g Dimethyldichlorsilan
115 g technisches Tetramethylsilan
8 g AlCl₃
1,5 g Trifluormethansulfonsäuretrimethylsilylester
Nach 120 min Reaktionszeit betrug der verbleibende Tetramethylsilan-Gehalt ca. 1 Gew.-% und der Gehalt an Trimethylchlorsilan 86 Gew.-%.

### Beispiel 3:

150 g Dimethyldichlorsilan
115 g technisches Tetramethylsilan
8 g AlCl₃
1,5 g Aluminiumtris(trifluormethansulfonat)
Nach 120 min Reaktionszeit betrug der verbleibende Tetramethylsilan-Gehalt ca. 1 Gew.-% und der Gehalt an Trimethylchlorsilan 86 Gew.-%.

### Beispiel 4:

150 g Dimethyldichlorsilan
115 g technisches Tetramethylsilan
8 g AlCl₃
1,5 g Certrichlorid
Nach 95 min Reaktionszeit betrug der verbleibende Tetramethylsilan-Gehalt ca. 1 Gew.-% und der Gehalt an Trimethylchlorsilan 86 Gew.-%.

### Beispiel 5:

150 g Dimethyldichlorsilan
115 g technisches Tetramethylsilan
8 g AlCl₃
1,5 g Gadoliniumtrichlorid
Nach 60 min Reaktionszeit betrug der verbleibende Tetramethylsilan-Gehalt ca. 1 Gew.-% und der Gehalt an Trimethylchlorsilan 86 Gew.-%.

### Beispiel 6:

1,45 t Dimethyldichlorsilan
1 t technisches Tetramethylsilan
18 kg AlCl₃ (in situ hergestellt aus 16,7 kg Ethylaluminiumsesquichlorid und Chlorwasserstoff)
2,5 kg Trifluormethansulfonsäure
Nach 4 h Reaktionszeit unter Rückflussbedingungen betrug der verbleibende Tetramethylsilan-Gehalt ca. 2 Gew.-% und der Gehalt an Trimethylchlorsilan 85 Gew.-%.

### Beispiel 7:

Die Endreaktionsmischung aus Beispiel 6 wurde destillativ aufgearbeitet und der verbleibende Destillationssumpf von ca. 0,15 t wieder mit 1,45 t Dimethyldichlorsilan und 1 t technischem Tetramethylsilan versetzt und analog Beispiel 6 umgesetzt. Nach 4 h Reaktionszeit betrug der verbleibende Tetramethylsilan-Gehalt ca. 2 Gew.-% und der Gehalt an Trimethylchlorsilan 85 Gew.-%.

### Beispiel 8:

1,45 t Dimethyldichlorsilan
1 t technisches Tetramethylsilan
18 kg AlCl₃ (in situ hergestellt aus 16,7 kg Ethylaluminiumsesquichlorid und Chlorwasserstoff)
1,0 kg Certrichlorid
Nach 1 h Reaktionszeit betrug der verbleibende Tetramethylsilan-Gehalt ca. 1 Gew.-% und der Gehalt an Trimethylchlorsilan 86 Gew.-%.

### Beispiel 9:

Die Endreaktionsmischung aus Beispiel 8 wurde destillativ aufgearbeitet und der verbleibende Destillationssumpf von ca. 0,15 t wieder mit 1,45 t Dimethyldichlorsilan und 1 t technischem Tetramethylsilan versetzt und analog Beispiel 8 umgesetzt. Nach 1 h Reaktionszeit betrug der verbleibende Tetramethylsilan-Gehalt ca. 1 Gew.-% und der Gehalt an Trimethylchlorsilan 86 Gew.-%.

### Beispiel 10:

150 g Dimethyldichlorsilan
115 g technisches Tetramethylsilan
6 g AlCl₃
1 g Terbiumtrichlorid
Nach 60 min Reaktionszeit bei 40°C betrug der verbleibende Tetramethylsilan-Gehalt ca. 1 Gew.-% und der Gehalt an Trimethylchlorsilan 86 Gew.-%.

### Beispiel 11:

150 g Dimethyldichlorsilan
115 g technisches Tetramethylsilan
6 g AlCl₃
1 g Gadoliniumtrifluorid
Nach 60 min Reaktionszeit bei 40°C betrug der verbleibende Tetramethylsilan-Gehalt ca. 1 Gew.-% und der Gehalt an Trimethylchlorsilan 86 Gew.-%.

### Beispiel 12:

150 g Dimethyldichlorsilan
115 g technisches Tetramethylsilan
6 g AlCl₃
1 g Gadoliniumtribromid
Nach 60 min Reaktionszeit bei 40°C betrug der verbleibende Tetramethylsilan-Gehalt ca. 1 Gew.-% und der Gehalt an Trimethylchlorsilan 86 Gew.-%.

### Beispiel 13:

150 g Dimethyldichlorsilan
115 g technisches Tetramethylsilan
6 g AlCl₃
0,1 g Gadoliniumtrichlorid
Nach 60 min Reaktionszeit bei 40°C betrug der verbleibende Tetramethylsilan-Gehalt ca. 1 Gew.-% und der Gehalt an Trimethylchlorsilan 86 Gew.-%.

### Beispiel 14:

150 g Dimethyldichlorsilan
115 g technisches Tetramethylsilan
6 g AlBr₃
0,3 g Gadoliniumtrichlorid
Nach 60 min Reaktionszeit bei 40°C betrug der verbleibende Tetramethylsilan-Gehalt ca. 1 Gew.-% und der Gehalt an Trimethylchlorsilan 86 Gew.-%.

### Vergleichsversuch 1:

150 g Dimethyldichlorsilan
115 g technisches Tetramethylsilan
8 g AlCl₃
Nach 120 min Reaktionszeit betrug der verbleibende Tetramethylsilan-Gehalt ca. 23 Gew.-%, der Gehalt an Trimethylchlorsilan 34 Gew.-%. Erst nach 360 min Reaktionszeit unter Rückflussbedingungen lag der verbleibende Tetramethylsilan-Gehalt bei ca. 1 Gew.-% und der Gehalt an Trimethylchlorsilan bei 86 Gew.-%

### Vergleichsversuch 2:

150 g Dimethyldichlorsilan
115 g technisches Tetramethylsilan
8 g Trifluormethansulfonsäure
Nach 120 min Reaktionszeit konnte kein Umsatz, d.h. keine Veränderung der Zusammensetzung des Silan-Gemisches, festgestellt werden.

### Vergleichsversuch 3:

150 g Dimethyldichlorsilan
115 g technisches Tetramethylsilan
8 g Aluminiumtris(trifluormethansulfonat)
Nach 120 min Reaktionszeit konnte kein Umsatz, d.h. keine Veränderung der Zusammensetzung des Silan-Gemisches, festgestellt werden.

### Vergleichsversuch 4:

150 g Dimethyldichlorsilan
115 g technisches Tetramethylsilan
9,5 g Reaktionsprodukt aus Aluminiumtrichlorid und Trifluormethansulfonsäure
Nach 120 min Reaktionszeit konnte kein Umsatz, d.h. keine Veränderung der Zusammensetzung des Silan-Gemisches, festgestellt werden.

### Vergleichsversuch 5:

Beispiel 6 wurde wiederholt mit der Abänderung, dass keine Trifluormethansulfonsäure zugesetzt wurde. Nach 12 h Reaktionszeit unter Rückflussbedingungen betrug der verbleibende Tetramethylsilan-Gehalt ca. 2 Gew.-% und der Gehalt an Trimethylchlorsilan 85 Gew.-%.

### Beispiele 15 bis 30 und Vergleichsversuche 6 bis 8: Umsetzung von Tetramethylsilan mit Tetrachlorsilan

Eine Mischung aus Tetrachlorsilan und technischem Tetramethylsilan (TMS, ca. 85 Gew.-% bestimmt durch Gaschromatographie (GC)) mit einem Gehalt an Tetramethylsilan von 46 Mol-% und Tetrachlorsilan von 47 Mol-% (der Rest besteht unter anderem aus Methyl-Chlor-Hydrogen-Silanen und Chlor-Hydrogen-Silanen) wird unter Inertbedingungen mit 2 Mol-% (Mol-% bezogen auf die Silane) Aluminiumtrichlorid sowie 0,5 Mol-% (Mol-% bezogen auf die Silane) Cokatalysator gemäß Tabelle 1 in einem Autoklaven unter Rühren 4 h auf 100°C erhitzt. Nach dem Abkühlen wird der abgesetzte Katalysator abgetrennt und das Reaktionsprodukt mit ²⁹Si-NMR analysiert. Die Ergebnisse sind in Tabelle 1 zusammengefasst.

**Tabelle 1:**

| | | | Verbleibende Ausgangsstoffe in der Reaktionsmischung | | Zielprodukte in der Reaktionsmischung | | |
|---|---|---|---|---|---|---|---|
| Vergl.-versuche bzw. Beispiele | Co-Katalysator | % TMS umgesetzt | Si(CH₃)₄ Mol-% | SiCl₄ Mol-% | CH₃SiCl₃ Mol-% | (CH₃)₂SiCl₂ Mol-% | (CH₃)₃SiCl Mol-% |
| V 6 | - | 14,6 | 39,6 | 43,6 | | | 14,6 |
| V 7* | - | 19,0 | 37,7 | 43 | | | 16 |
| V 8** | GdCl₃ | 3 | 48,5 | 50,7 | - | - | 0,7 |
| B 15 | HfCl₄ | 36 | 29,7 | 42,2 | - | - | 24,1 |
| B 16 | LaCl₃ | 32,2 | 31,4 | 43,3 | - | - | 21,9 |
| B 17 | SmCl₃ | 57,9 | 19,5 | 40,1 | - | - | 36,7 |
| B 18 | YCl₃ | 78,4 | 10,0 | 37,8 | - | - | 48,9 |
| B 19 | Dy(CF₃SO₃)₃ | 26,7 | 34,0 | 44,3 | - | - | 18,6 |
| B 20 | TbCl₃ | 97,0 | 1,4 | 34,6 | - | 1,6 | 58,8 |
| B 21 | Gd(CH₃COO)₃ | 73,1 | 12,5 | 39,1 | - | - | 46 |
| B 22 | NdCl₃ | 75,5 | 11,4 | 38,1 | - | 0,1 | 47 |
| B 23 | GdCl₃ | 98,5 | 0,5 | 44,6 | - | 3,8 | 58 |
| B 24 | CeCl₃ | 50,4 | 18,2 | 39,6 | - | - | 38,1 |
| B 25 | PrCl₃ | 64,6 | 16,3 | 39 | - | 0,1 | 41 |
| B 26 | TmCl₃ | 40,8 | 27,3 | 43,5 | - | - | 25,8 |
| B 27 | Gd₂O₃*** | 49,2 | 23,4 | 41,5 | - | - | 32,0 |
| B 28 | LuCl₃ | 77,2 | 10,5 | 37,3 | - | 0,2 | 48,8 |
| B 29 | ErCl₃ | 59,7 | 18,5 | 40,2 | - | - | 37 |
| B 30 | HoCl₃ | 84,7 | 7,0 | 36,2 | - | - | 53,9 |

| | | | | | | | |
|---|---|---|---|---|---|---|---|
| *) 2,5 Mol-% Aluminiumtrichlorid **) Mischung aus 50 Mol-% reinem Tetramethylsilan und 50 Mol-% Siliciumtetrachlorid (Die Mischung enthält keine H-Si-Verbindung). Es wird kein Katalysator (AlCl₃) eingesetzt. ***) 0,5 Mol-% Co-Katalysator bezogen auf Gadolinium | | | | | | | |

### Beispiele 31 und 32: Umsetzung von Tetramethylsilan mit Methyltrichlorsilan

Eine Mischung aus Tetrachlorsilan und technischem Tetramethylsilan (TMS, ca. 85 Gew.-% bestimmt durch Gaschromatographie (GC)) mit einem Gehalt an Tetramethylsilan von 48 Mol-% und Methyltrichlorsilan von 48 Mol-% (der Rest besteht unter anderem aus Methyl-Chlor-Hydrogen-Silanen und Chlor-Hydrogen-Silanen) wird unter Inertbedingungen mit 2 Mol-% (Mol-% bezogen auf die Silane) Aluminiumtrichlorid sowie 0,5 Mol-% (Mol-% bezogen auf die Silane) Cokatalysator gemäß Tabelle 2 in einem Autoklaven unter Rühren 4 h auf 80°C erhitzt. Nach dem Abkühlen wird der abgesetzte Katalysator abgetrennt und das Reaktionsprodukt mit ²⁹Si-NMR analysiert. Die Ergebnisse sind in Tabelle 2 zusammengefasst.

**Tabelle 2:**

| | | | Verbleibende Ausgangsstoffe in der Reaktionsmischung | | Zielprodukte in der Reaktionsmischung | |
|---|---|---|---|---|---|---|
| Beispiele | Co-Katalysator | % TMS umgesetzt | Si(CH₃)₄ Mol-% | CH₃SiCl₃ Mol-% | (CH₃)₂SiCl₂ Mol-% | (CH₃)₃SiCl Mol-% |
| B 31 | GdCl₃ | 100 | 0 | 2,1 | 54,3 | 42,6 |
| B 32 | CeCl₃ | 99,8 | 0,1 | 12,1 | 35,1 | 51,1 |

### Beispiel 33: Umsetzung von Trimethylchlorsilan mit Methyltrichlorsilan

Eine Mischung aus 47,5 Mol-% Trimethylchlorsilan und 47,5 Mol-% Methyltrichlorsilan, die 2,5 Mol-% Dimethylchlorsilan und 2,5 Mol-% Methyldichlorsilan enthalten, wird unter Inertbedingungen mit 2 Mol-% (Mol-% bezogen auf die Silane) Aluminiumtrichlorid sowie 0,5 Mol-% (Mol-% bezogen auf die Silane) Cokatalysator gemäß Tabelle 3 in einem Autoklaven unter Rühren 4 h auf 80°C erhitzt. Nach dem Abkühlen wird der abgesetzte Katalysator abgetrennt und das Reaktionsprodukt mit ²⁹Si-NMR analysiert. Die Ergebnisse sind in Tabelle 3 zusammengefasst.

**Tabelle 3:**

| | | Verbleibende Ausgangsstoffe in der Reaktionsmischung | | Zielprodukt in der Reaktionsmischung |
|---|---|---|---|---|
| Beispiele | Co-Katalysator | (CH₃)₃SiCl Mol-% | CH₃SiCl₃ Mol-% | (CH₃)₂SiCl₂ Mol-% |
| B 33 | GdCl₃ | 17,3 | 15,6 | 63 |

### Beispiel 34: Disproportionierung von Dimethyldichlorsilan

Eine Mischung aus 95 Mol-% Dimethyldichlorsilan, 2,5 Mol-% Dimethylchlorsilan und 2,5 Mol-% Methyldichlorsilan wird unter Inertbedingungen mit 2 Mol-% (Mol-% bezogen auf die Silane) Aluminiumtrichlorid sowie 0,5 Mol-% (Mol-% bezogen auf die Silane) Cokatalysator gemäß Tabelle 4 in einem Autoklaven unter Rühren 4 h auf 100°C erhitzt. Nach dem Abkühlen wird der abgesetzte Katalysator abgetrennt und das Reaktionsprodukt mit ²⁹Si-NMR analysiert. Die Ergebnisse sind in Tabelle 4 zusammengefasst.

**Tabelle 4:**

| | | Verbleibender Ausgangsstoff im der Reaktionsmischung | Zielprodukte in der Reaktionsmischung | |
|---|---|---|---|---|
| Beispiel | Co-Katalysator | (CH₃)₂SiCl₂ Mol% | (CH₃)₃SiCl Mol% | CH₃SiCl₃ Mol% |
| B 34 | GdCl₃ | 88 | 4,4 | 4,1 |

### Beispiel 35: Disproportionierung von Phenyltrichlorsilan

Eine Mischung aus 95 Mol-% Phenyltrichlorsilan, 2,5 Mol-% Dimethylchlorsilan und 2,5 Mol-% Methyldichlorsilan wird unter Inertbedingungen mit 2 Mol-% (Mol-% bezogen auf die Silane) Aluminiumtrichlorid sowie 0,5 Mol-% (Mol-% bezogen auf die Silane) Cokatalysator gemäß Tabelle 5 in einem Autoklaven unter Rühren 2 h auf 100°C erhitzt. Nach dem Abkühlen wird der abgesetzte Katalysator abgetrennt und das Reaktionsprodukt mit ²⁹Si-NMR analysiert. Die Ergebnisse sind in Tabelle 5 zusammengefasst.

**Tabelle 5:**

| | | Verbleibender Ausgangsstoff im der Reaktionsmischung | Zielprodukte in der Reaktionsmischung |
|---|---|---|---|
| Beispiel | Co-Katalysator | PhSiCl₃ Mol% | Ph₂SiCl₂ Mol% |
| B 35 | GdCl₃ | 90 | 10 |

## Patentansprüche

1. Verfahren zur Umwandlung von Organosilanen durch Umsetzung von mindestens einem Silan (1) der allgemeinen Formel
RₐSiCl₄₋ₐ (I)
mit mindestens einem weiteren Silan (2) der allgemeinen Formel
R_{b}SiCl_{4-b} (II)
wobei Silan (2) gleich oder verschieden von Silan (1), vorzugsweise verschieden von Silan (1), ist, gegebenenfalls unter Mitverwendung von Si-gebundenen Wasserstoff aufweisenden Silanen (3) der Formel
R_{d}HₑSiCl_{4-d-e} (III)
in Gegenwart von Aluminiumsalzen, vorzugsweise Aluminiumhalogeniden, als Katalysatoren und
in Gegenwart von Cokatalysatoren,
wobei mindestens ein von Silan (1) und (2) verschiedenes Silan (4) der allgemeinen Formel
R_{c}SiCl_{4-c} (IV)
erhalten wird,
wobei R jeweils gleiche oder verschiedene Alkylreste mit 1 bis 4 Kohlenstoffatomen oder einen Phenylrest bedeutet,
a 2, 3 oder 4,
b 0, 1, 2 oder 3,
c 1, 2 oder 3,
d 0, 1, 2 oder 3 und
e 1, 2 oder 3 ist,
mit der Maßgabe, dass die Summe d+e höchstens 4 ist, **dadurch gekennzeichnet, dass** als Cokatalysatoren solche ausgewählt aus der Gruppe der Trifluormethansulfonsäure, Trifluormethansulfonsäureester, Aluminium-tris(trifluormethansulfonat), Metallsalze von Yttrium und Hafnium, Metallsalze der Lanthanoiden und Actinoiden und Gemische dieser Cokatalysatoren eingesetzt werden.

2. Verfahren nach Anspruch 1, **dadurch gekennzeichnet, dass** als Katalysator Aluminiumtrichlorid eingesetzt wird.

3. Verfahren nach Anspruch 2, **dadurch gekennzeichnet, dass** Aluminiumtrichlorid entweder als solches eingesetzt wird oder in situ hergestellt wird.

4. Verfahren nach Anspruch 2 oder 3, **dadurch gekennzeichnet, dass** Aluminiumtrichlorid in situ aus Ethylaluminiumsesquichlorid und Chlorwasserstoff hergestellt wird.

5. Verfahren nach einem der Ansprüche 1 bis 4, **dadurch gekennzeichnet, dass** als Metallsalze von Yttrium oder Hafnium oder der Lanthanoiden und Actinoiden Halogenide, vorzugsweise Fluoride, Chloride oder Bromide; Sulfonate; Oxide oder Carboxylate eingesetzt werden.

6. Verfahren nach einem der Ansprüche 1 bis 5, **dadurch gekennzeichnet, dass** als Metalle der Lanthanoiden und Actinoiden Lanthan, Cer, Praseodym, Neodym, Samarium, Europium, Gadolinium, Terbium, Dysprosium, Holmium, Erbium, Thulium, Ytterbium oder Lutetium, bevorzugt Cer, Gadolinium oder Terbium, eingesetzt werden.

7. Verfahren nach einem der Ansprüche 1 bis 5, **dadurch gekennzeichnet, dass** als Metallsalze Yttriumtrichlorid, Certrichlorid, Neodymtrichlorid, Gadoliniumtrifluorid, Gadoliniumtrichlorid, Gadoliniumtribromid, Gadolinium(III)acetat, Terbiumtrichlorid, Holiumtrichlorid oder Lutetiumtrichlorid, bevorzugt Certrichlorid, Gadoliniumtrichlorid oder Terbiumtrichlorid eingesetzt werden.

8. Verfahren nach einem der Ansprüche 1 bis 7, **dadurch gekennzeichnet, dass** Aluminiumsalze, vorzugsweise Aluminiumhalogenide, bevorzugt Aluminiumtrichlorid, in Mengen von 0,2 bis 10 Gew.-%, vorzugsweise 0,8 bis 3,0 Gew.-%, jeweils bezogen auf das Gesamtgewicht der eingesetzten Silane (1) und (2), eingesetzt wird.

9. Verfahren nach einem der Ansprüche 1 bis 8, **dadurch gekennzeichnet, dass** Cokatalysatoren in Mengen von vorzugsweise 0,002 bis 2,5 Gew.-%, bevorzugt 0,008 bis 0,3 Gew.-%, jeweils bezogen auf das Gesamtgewicht der eingesetzten Silane (1) und (2), eingesetzt werden.

10. Verfahren nach einem der Ansprüche 1 bis 9, **dadurch gekennzeichnet, dass** als Silan (1) Tetramethylsilan, Trimethylchlorsilan, Dimethyldichlorsilan und Phenyltrichlorsilan, bevorzugt Tetramethylsilan, eingesetzt wird.

11. Verfahren nach einem der Ansprüche 1 bis 9, **dadurch gekennzeichnet, dass** als Silan (2) Dimethyldichlorsilan, Methyltrichlorsilan und Tetrachlorsilan eingesetzt wird.

12. Verfahren nach einem der Ansprüche 1 bis 9, **dadurch gekennzeichnet, dass** als Silan (1) Tetramethylsilan und als Silan (2) Dimethyldichlorsilan eingesetzt wird, wobei Trimethylchlorsilan erhalten wird.

13. Verfahren nach einem der Ansprüche 1 bis 9, **dadurch gekennzeichnet, dass** als Silan (1) Tetramethylsilan und als Silan (2) Tetrachlorsilan eingesetzt wird, wobei Trimethylchlorsilan erhalten wird.

## Claims

1. Method for converting organosilanes by reacting at least one silane (1) of the general formula
RₐSiCl₄₋ₐ (I)
with at least one further silane (2) of the general formula
R_{b}SiCl_{4-b} (II)
wherein silane (2) is identical or different from silane (1), preferably different from silane (1), optionally with additional use of silanes (3) which contain Si-bonded hydrogen and have the formula
R_{d}HₑSiCl_{4-d-e} (III)
in the presence of aluminum salts, preferably aluminum halides, as catalysts and
in the presence of cocatalysts,
to obtain at least one silane (4) which differs from silanes (1) and (2) and has the general formula
R_{c}SiCl_{4-c} (IV) ,
wherein R denotes in each case identical or different alkyl radicals having 1 to 4 carbon atoms or a phenyl radical,
a is 2, 3 or 4,
b is 0, 1, 2 or 3,
c is 1, 2 or 3,
d is 0, 1, 2 or 3 and
e is 1, 2 or 3,
with the proviso that the sum total of d+e is at most 4,
**characterized in that** the cocatalysts used are those selected from the group of trifluoromethanesulfonic acid, trifluoromethanesulfonic esters, aluminum tris(trifluoromethanesulfonate), metal salts of yttrium and hafnium, metal salts of the lanthanides and actinides, and mixtures of these cocatalysts.

2. Method according to Claim 1, **characterized in that** the catalyst used is aluminum trichloride.

3. Method according to Claim 2, **characterized in that** aluminum trichloride is either used as such or is produced in situ.

4. Method according to Claim 2 or 3, **characterized in that** aluminum trichloride is produced in situ from ethylaluminum sesquichloride and hydrogen chloride.

5. Method according to any of Claims 1 to 4, **characterized in that**, as the metal salts of yttrium or hafnium or of the lanthanides and actinides, use is made of halides, preferably fluorides, chlorides or bromides; sulfonates; oxides or carboxylates.

6. Method according to any of Claims 1 to 5, **characterized in that** the metals of the lanthanides and actinides that are used are lanthanum, cerium, praseodymium, neodymium, samarium, europium, gadolinium, terbium, dysprosium, holmium, erbium, thulium, ytterbium or lutetium, preferably cerium, gadolinium or terbium.

7. Method according to any of Claims 1 to 5, **characterized in that** the metal salts used are yttrium trichloride, cerium trichloride, neodymium trichloride, gadolinium trifluoride, gadolinium trichloride, gadolinium tribromide, gadolinium(III) acetate, terbium trichloride, holmium trichloride or lutetium trichloride, preferably cerium trichloride, gadolinium trichloride or terbium trichloride.

8. Method according to any of Claims 1 to 7, **characterized in that** aluminum salts, by preference aluminum halides, preferably aluminum trichloride, are/is used in amounts of from 0.2% to 10% by weight, preferably 0.8% to 3.0% by weight, based in each case on the total weight of silanes (1) and (2) used.

9. Method according to any of Claims 1 to 8, **characterized in that** cocatalysts are used in amounts of by preference 0.002% to 2.5% by weight, preferably 0.008% to 0.3% by weight, based in each case on the total weight of silanes (1) and (2) used.

10. Method according to any of Claims 1 to 9, **characterized in that** the silane (1) used is tetramethylsilane, trimethylchlorosilane, dimethyldichlorosilane and phenyltrichlorosilane, preferably tetramethylsilane.

11. Method according to any of Claims 1 to 9, **characterized in that** the silane (2) used is dimethyldichlorosilane, methyltrichlorosilane and tetrachlorosilane.

12. Method according to any of Claims 1 to 9, **characterized in that** the silane (1) used is tetramethylsilane and the silane (2) used is dimethyldichlorosilane, with trimethylchlorosilane being obtained.

13. Method according to any of Claims 1 to 9, **characterized in that** the silane (1) used is tetramethylsilane and the silane (2) used is tetrachlorosilane, with trimethylchlorosilane being obtained.

## Revendications

1. Procédé pour la conversion d'organosilanes par transformation d'au moins un silane (1) de formule générale
RₐSiCl₄₋ₐ (I)
avec au moins un autre silane (2) de formule générale
R_{b}SiCl_{4-b} (II)
la silane (2) étant identique ou différent du silane (1), de préférence différent du silane (1), le cas échéant avec utilisation conjointe de silanes (3) présentant de l'hydrogène lié par Si de formule
R_{d}HₑSiCl_{4-d-e} (III)
en présence de sels d'aluminium, de préférence d'halogénures d'aluminium, comme catalyseurs et en présence de cocatalyseurs, au moins un silane (4), différent du silane (1) et du silane (2), de formule générale
R_{c}SiCl_{4-c} (IV)
étant obtenu
R signifiant des radicaux alkyle identiques ou différents comprenant 1 à 4 atomes de carbone ou un radical phényle,
a valant 2, 3 ou 4,
b valant 0, 1, 2 ou 3,
c valant 1, 2 ou 3,
d valant 0, 1, 2 ou 3 et
e valant 1, 2 ou 3,
sous réserve que la somme d + e vaille au plus 4, **caractérisé en ce qu'**on utilise, comme cocatalyseurs, ceux choisis dans le groupe formé par l'acide trifluorométhanesulfonique, les esters de l'acide trifluorométhanesulfonique, le tris(trifluorométhanesulfonate) d'aluminium, les sels métalliques de l'yttrium et du hafnium, les sels métalliques des lanthanides et des actinides et les mélanges de ces cocatalyseurs.

2. Procédé selon la revendication 1, **caractérisé en ce qu'**on utilise, comme catalyseur, du trichlorure d'aluminium.

3. Procédé selon la revendication 2, **caractérisé en ce que** le trichlorure d'aluminium est soit utilisé tel quel, soit préparé in situ.

4. Procédé selon la revendication 2 ou 3, **caractérisé en ce que** le trichlorure d'aluminium est préparé in situ à partir de sesquichlorure d'éthylaluminium et d'acide chlorhydrique.

5. Procédé selon l'une quelconque des revendications 1 à 4, **caractérisé en ce qu'**on utilise, comme sels métalliques de l'yttrium ou du hafnium ou des lanthanides et des actinides, des halogénures, de préférence des fluorures, des chlorures ou des bromures ; des sulfonates ; des oxydes ou des carboxylates.

6. Procédé selon l'une quelconque des revendications 1 à 5, **caractérisé en ce qu'**on utilise, comme métaux des lanthanides et des actinides, le lanthane, le cérium, le praséodyme, le néodyme, le samarium, l'europium, le gadolinium, le terbium, le dysprosium, l'holmium, l'erbium, le thulium, l'ytterbium ou le lutétium, de préférence le cérium, le gadolinium ou le terbium.

7. Procédé selon l'une quelconque des revendications 1 à 5, **caractérisé en ce qu'**on utilise comme sels métalliques le trichlorure d'yttrium, le trichlorure de cérium, le trichlorure de néodyme, le trifluorure de gadolinium, le trichlorure de gadolinium, le tribromure de gadolinium, l'acétate de gadolinium (III), le trichlorure de terbium, le trichlorure d'holmium ou le trichlorure de lutétium, de préférence le trichlorure de cérium, le trichlorure de gadolinium ou le trichlorure de terbium.

8. Procédé selon l'une quelconque des revendications 1 à 7, **caractérisé en ce qu'**on utilise les sels d'aluminium, de préférence les halogénures d'aluminium, de préférence le trichlorure d'aluminium, en des quantités de 0,2 à 10% en poids, de préférence de 0,8 à 3,0% en poids, à chaque fois par rapport au poids total des silanes (1) et (2) utilisés.

9. Procédé selon l'une quelconque des revendications 1 à 8, **caractérisé en ce que** les cocatalyseurs sont utilisés en des quantités de préférence de 0,002 à 2,5% en poids, de préférence de 0,008 à 0,3% en poids, à chaque fois par rapport au poids total des silanes (1) et (2) utilisés.

10. Procédé selon l'une quelconque des revendications 1 à 9, **caractérisé en ce qu'**on utilise, comme silane (1), le tétraméthylsilane, le triméthylchlorosilane, le diméthyldichlorosilane et le phényltrichlorosilane, de préférence le tétraméthylsilane.

11. Procédé selon l'une quelconque des revendications 1 à 9, **caractérisé en ce qu'**on utilise, comme silane (2), le diméthyldichlorosilane, le méthyltrichlorosilane et le tétrachlorosilane.

12. Procédé selon l'une quelconque des revendications 1 à 9, **caractérisé en ce qu'**on utilise, comme silane (1), du tétraméthylsilane et, comme silane (2), du diméthyldichlorosilane ; du triméthylchlorosilane étant obtenu.

13. Procédé selon l'une quelconque des revendications 1 à 9, **caractérisé en ce qu'**on utilise, comme silane (1), du tétraméthylsilane et, comme silane (2), du tétrachlorosilane ; du triméthylchlorosilane étant obtenu.
